# EUROPEAN PATENT APPLICATION

(11) **EP 4 485 288 A1**
(43) Date of publication of application: **01.01.2025**
(21) Application number: 23182575.3
(22) Date of filing: 30.06.2023
(51) Int. Cl.: G06N 5/022, G06N 3/0475, G06N 3/094

(54) **METHOD AND SYSTEM FOR RECOMMENDING CHANGES TO A DEPLOYED INDUSTRIAL AUTOMATION SYSTEM**

(71) Applicant: Siemens Aktiengesellschaft, 80333 München (DE)
(72) Inventor: Brandt, Sebastian-Philipp, 81827 München (DE); Schneider, Patrick, 80331 München (DE)
(74) Representative: Siemens Patent Attorneys

(57) **Abstract**

A database (POH) provides semi-structured data about a first deployed system and other deployed systems, wherein each deployed system is an industrial automation system at a different location, and wherein each deployed system consists of modules. A data ingestion component (DIC) uses an ontology (ONT) to integrate the semi-structured data into a single knowledge graph (KG), by representing a structural development of each deployed system over time, by creating an event node (EN) for each structure-changing event in the deployed system and attaching a subgraph to the event node representing a context of the structure-changing event. A generative deep-learning component (DL) has been trained with the knowledge graph to perform knowledge graph completion. It receives as input a new subgraph with a new event node and generates a recommended action for a structural change of one of the deployed systems, by completing the new subgraph with at least one action node (AN) identifying the recommended action and at least one module node (MN) identifying a first module that is added, replaced, or removed by the recommended action in the first deployed system. This modelling strategy for the knowledge-graph breaks down the continuous flow of changes at a customer site into a discrete set of subgraphs for which well-established similarity metrics exist, allowing for an automated recommending of changes to the deployed system. This automation of a previously time-consuming, costintensive, and largely manual process yields a number of benefits.

## Description

Independent of the grammatical term usage, individuals with male, female or other gender identities are included within the term.

Software solutions for supporting a relationship between a customer and a supplier have a customer-facing aspect and a supplier-facing one. In the following, the term "supplier" can also represent the role of a manufacturer or a service provider. From the perspective of the customer who has deployed products by the supplier, taking a decision to modernize or otherwise change the deployed equipment is usually inherently complicated because it involves many variables - including but not limited to new product offerings by the supplier, changing market conditions and evolving business goals of the customer.

From the supplier's perspective, the decision to initiate a dialogue with a customer about evolving the deployed equipment is similarly dependent on the same variables. The additional hurdle faced by the supplier here is gaining the trust of the customer in the appropriateness of the advice.

Upgrading deployed products or solutions, both from the customer or supplier side, is usually a highly manual process involving very case-specific consultancy work. This holds for both the customer's perspective and the supplier's. For the customer, obtaining reliable data beyond their own installed equipment is inherently difficult. While the supplier does potentially have access to valuable data across multiple customers, analysing it appropriately and matching it against the needs of a specific customer is time-consuming and difficult.

### Knowledge Graphs

Graph-based data analytics are playing an increasingly crucial role in industrial applications such as industrial automation systems. A prominent example are knowledge graphs, which are based on graph-structured databases and are able to ingest and represent (with semantic information) knowledge from potentially multiple sources and domains. Knowledge graphs are rich data structures that enable a symbolic description of abstract concepts and how they relate to each other, also called ontologies. The use of knowledge graphs makes it possible to integrate previously isolated data sources in a way that enables AI and data analytics applications to work on a unified, contextualized, semantically rich knowledge base. This enables more generic, interpretable, in-teroperable, and accurate AI algorithms which perform their tasks (e.g., reasoning or inference) working with well-defined entities and relationships from the domain(s) of interest, e.g., industrial automation or building systems.

In general, a knowledge graph consists of nodes representing entities and edges representing relations between these entities. For instance, in an industrial automation system, the nodes could represent physical objects like sensors, industrial controllers like programmable logic controllers (PLCs), robots, machine operators or owners, drives, manufactured objects such as drives, tools, elements of a bill of materials, or other hardware components. Also, more abstract entities like attributes and configurations of said physical objects, production schedules and plans, skills of a machine or a robot, or sensor measurements are representable. For example, an abstract entity could be an IP address, a data type or an application running on the industrial automation system.

Edges of different types between nodes model on how these entities relate to each other. This way, the knowledge graph can be summarized by semantically meaningful statements, so-called triples or triple statements, that take the simple and human-readable shape `subject - predicate - object', or in graph format, 'node - relation - node'. Triple statements are usually represented in a machine-readable format such as the W3C standard Resource Description Framework (RDF). A collection of such triples constitutes a knowledge graph, to which a wide range of existing algorithms can be applied to perform data analytics.

### Industrial Automation Systems

Over the past two decades, advancements in industrial automation have transformed the factory floors and processes in several industries, ranging from process industries (e.g., Oil and Gas, Power and Utilities, Water and Wastewater) to hybrid industries (e.g., Food and Beverage, Wind) to discrete industries (e.g., Automotive Manufacturing, Aerospace, Robotics).

Automating processes in any of these industries requires engineers to design and configure an industrial automation system - in other words to complete an engineering project for a complex system, consisting of a multitude of individual modules, the interplay of modules fulfils the functional requirements arising from the intended application. Selection of necessary modules is typically done using Configure Price Quote (CPQ) software tools offered by their manufacturer. Working on these engineering projects also requires specifying connections between selected modules by the user.

To speed up the design process and alleviate information overload of a user performing such a complex engineering process, recommender systems are widely deployed to perform personalized information filtering in a variety of applications, including industrial ones, such as CPQ for engineering systems, simulation software for modelling and analysis of multi-domain systems, schematic drawing software, or clinical recommender systems in the health care domain. These recommender systems propose appropriate modules based on information about existing designs and background knowledge to support the user.

WO 2021037603 A1 and WO 2020120123 A1 disclose recommendation engines for automatically providing recommendations to support a user in the completion of an engineering project.

Similar to WO 2022022954 A1, it is an object of this invention to provide a method and system that converts engineering data to an efficient knowledge representation that allows for fully automated recommendations. In this case, the engineering data are a repository of semi-structured data containing a history of product orders placed by customers, with the products being modules that have been deployed in industrial automation systems. As the knowledge representation needs to be so efficient that it can serve as a single point of reference for the operation of a fully automated recommender system, a highly sophisticated modelling strategy is required for the conversion.

The objectives of the invention are solved by the independent claims. Further advantageous arrangements and embodiments of the invention are set forth in the respective dependent claims.

According to the method for recommending changes to a deployed industrial automation system, the following operations are performed by components, wherein the components are hardware components and/or software components executed by one or more processors:
- providing, by a database, semi-structured data about a first deployed system and other deployed systems, wherein each deployed system is an industrial automation system at a different location, and wherein each deployed system consists of modules,
- integrating, by a data ingestion component using an ontology, the semi-structured data into a single knowledge graph, by representing
- each deployed system with a node, wherein a first node represents the first deployed system,
- a structure of each deployed system with module nodes and edges, wherein each module node represents a module of the deployed system, and
- a structural development of each deployed system over time, by creating an event node for each structure-changing event in the deployed system and attaching a subgraph to the event node representing a context of the structure-changing event, wherein the subgraph contains edges from the event node to
   - the node representing the deployed system,
   - at least one of the module nodes, and
   - at least one action node representing a type of action of the structure-changing event,
- training a generative deep-learning component with the knowledge graph to perform knowledge graph completion,
- initializing a new subgraph by creating a new event node and an edge connecting the new event node to the first node,
- generating, by the generative deep-learning component receiving as input the new subgraph, a recommended action for a structural change of the first deployed system, by completing the new subgraph with at least one action node identifying the recommended action and at least one module node identifying a first module that is added, replaced, or removed by the recommended action in the first deployed system, and
- outputting, by a user interface, at least the first module and the recommended action.

The system for recommending changes to a deployed industrial automation system comprises the following components, wherein the components are hardware components and/or software components executed by one or more processors:
- a database, configured for providing semi-structured data about a first deployed system and other deployed systems, wherein each deployed system is an industrial automation system at a different location, and wherein each deployed system consists of modules,
- a data ingestion component, configured for using an ontology to integrate the semi-structured data into a single knowledge graph, by representing
   - each deployed system with a node, wherein a first node represents the first deployed system,
   - a structure of each deployed system with module nodes and edges, wherein each module node represents a module of the deployed system, and
   - a structural development of each deployed system over time, by creating an event node for each structure-changing event in the deployed system and attaching a subgraph to the event node representing a context of the structure-changing event, wherein the subgraph contains edges from the event node to
      - the node representing the deployed system,
      - at least one of the module nodes, and
      - at least one action node representing a type of action of the structure-changing event,
- a generative deep-learning component, having been trained with the knowledge graph to perform knowledge graph completion, and configured for
   - receiving as input a new subgraph with a new event node and an edge connecting the new event node to the first node, and
   - generating a recommended action for a structural change of the first deployed system, by completing the new subgraph with at least one action node identifying the recommended action and at least one module node identifying a first module that is added, replaced, or removed by the recommended action in the first deployed system, and
- a user interface, configured for outputting at least the first module and the recommended action.

The following advantages and explanations are not necessarily the result of the object of the independent claims. Rather, they may be advantages and explanations that only apply to certain embodiments or variants.

In connection with the invention, unless otherwise stated in the description, the terms "training", "generating", "computer-aided", "calculating", "determining", "reasoning", "retraining" and the like relate preferably to actions and/or processes and/or processing steps that change and/or generate data and/or convert the data into other data, the data in particular being or being able to be represented as physical quantities, for example as electrical impulses.

The term "computer" should be interpreted as broadly as possible, in particular to cover all electronic devices with data processing properties. Computers can thus, for example, be personal computers, servers, clients, programmable logic controllers (PLCs), handheld computer systems, pocket PC devices, mobile radio devices, smartphones, devices, or any other communication devices that can process data with computer support, processors, and other electronic devices for data processing. Computers can in particular comprise one or more processors and memory units.

In connection with the invention, a "memory", "memory unit" or "memory module" and the like can mean, for example, a volatile memory in the form of random-access memory (RAM) or a permanent memory such as a hard disk or a Disk.

The modelling strategy for the knowledge-graph breaks down the continuous flow of changes at a customer site into a discrete set of subgraphs for which well-established similarity metrics exist.

The method and system, or at least some of their embodiments, provide a solution for fully automating the relationship between a customer and a supplier. This automation of a previously time-consuming, cost-intensive, and largely manual process yields a number of benefits.

The method and system, or at least some of their embodiments, work uniformly on the entire customer base of a supplier. There is no need to adapt to the needs of any one customer. This greatly lowers the threshold of the supplier to analyze the installed base of each customer for potential enhancements and hence possibly further sales or upgrades. Moreover, the solution doesn't need to be modified in the case of new types of products or new services being added to the supplier's product range - as long as they are modelled appropriately in the knowledge graph.

The method and system, or at least some of their embodiments, can provide a fully automated dashboard or assistant that greatly lowers the threshold for a customer to consider enhancements to their installed base, similarly enhancing the opportunity for the supplier to grow their market.

The method and system, or at least some of their embodiments, by offering an immediate availability of strategic advice to the customer, greatly reduce the risk of an innovation gap where the customer misses crucial update or innovation cycles in product development or operation strategies.

The method and system, or at least some of their embodiments, have the potential to increase confidence and trust of the customer in the long-term viability of their relationship with the supplier.

In an embodiment of the method and system, the generative deep-learning component contains a generative adversarial network (GAN). The training operation is performed with GAN-based learning.

In another embodiment of the method and system, the ontology provides a conceptual representation of properties of the modules of the deployed systems.

In a further embodiment of the method and system, the ontology contains subsumption hierarchies that support poly-hierarchies, wherein each module is embedded in one of the subsumption hierarchies.

This embodiment enhances the modelling flexibility and also increases the number of potential anchor points by which the similarity of instance nodes can be established.

In another embodiment of the method and system, each action node represents an installation action adding a module, a replacement action replacing a module, or a decommissioning action removing a module. Of course, further action types are possible as well.

The computer program product comprises instructions which, when the program is executed by a computer, cause the computer to carry out a method according to one of the method claims.

The provisioning device for the computer program product stores and/or provides the computer program product.

The foregoing and other aspects of the present invention are best understood from the following detailed description when read in connection with the accompanying drawings. For the purpose of illustrating the invention, there are shown in the drawings embodiments that are presently preferred, it being understood, however, that the invention is not limited to the specific instrumentalities disclosed. The embodiments may be combined with each other. Furthermore, the embodiments may be combined with any of the features described above. Unless stated otherwise, identical reference signs denote the same features or functionally identical elements between drawings. Included in the drawings are the following Figures:
- Fig. 1: shows a first embodiment,
- Fig. 2: shows another embodiment,
- Fig. 3: shows a customer-facing use-case evolutions assistant UCEA based on a deep-learning algorithm,
- Fig. 4: shows an example of an event subgraph ESG,
- Fig. 5: shows a flowchart of a possible exemplary embodiment of a method for recommending changes to a deployed industrial automation system.

In the following description, various aspects of the present invention and embodiments thereof will be described. However, it will be understood by those skilled in the art that embodiments may be practiced with only some or all aspects thereof. For purposes of explanation, specific numbers and configurations are set forth in order to provide a thorough understanding. However, it will also be apparent to those skilled in the art that the embodiments may be practiced without these specific details.

The described components can each be hardware components or software components. For example, a software component can be a software module such as a software library; an individual procedure, subroutine, or function; or, depending on the programming paradigm, any other portion of software code that implements the function of the software component. A combination of hardware components and software components can occur, in particular, if some of the effects according to the invention are preferably exclusively implemented by special hardware (e.g., a processor in the form of an ASIC or FPGA) and some other part by software.

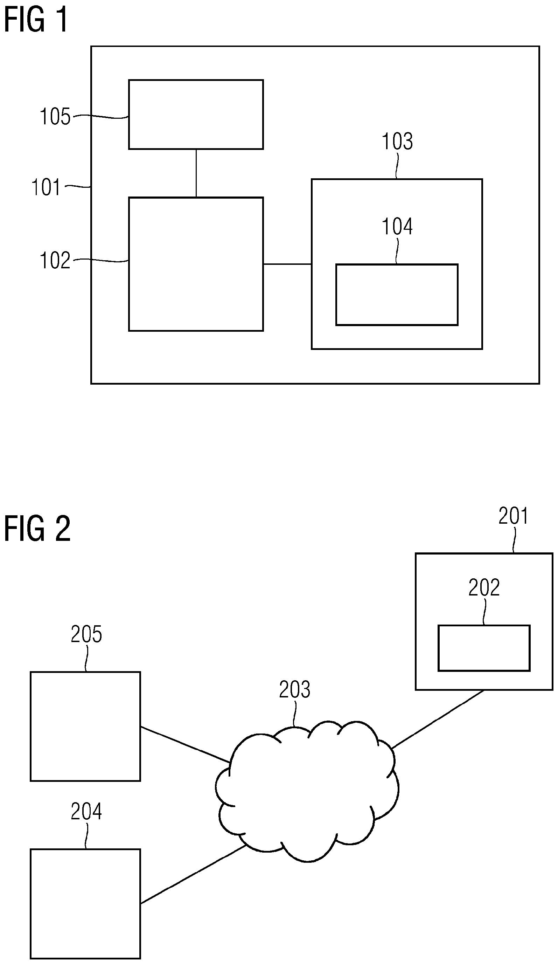

Fig. 1 shows one sample structure for computer-implementation of the invention which comprises:

| | |
|---|---|
| (101) | computer system |
| (102) | processor |
| (103) | memory |
| (104) | computer program (product) |
| (105) | user interface |

In this embodiment of the invention the computer program 104 comprises program instructions for carrying out the invention. The computer program 104 is stored in the memory 103 which renders, among others, the memory 103 and/or its related computer system 101 a provisioning device for the computer program 104. The computer system 101 may carry out the invention by executing the program instructions of the computer program 104 by the processor 102. Results of invention may be presented on the user interface 105. Alternatively, they may be stored in the memory 103 or on another suitable means for storing data.

Fig. 2 shows another sample structure for computer-implementation of the invention which comprises:

| | |
|---|---|
| (201) | provisioning device |
| (202) | computer program (product) |
| (203) | computer network/Internet |
| (204) | computer system |
| (205) | mobile device/smartphone |

In this embodiment the provisioning device 201 stores a computer program 202 which comprises program instructions for carrying out the invention. The provisioning device 201 provides the computer program 202 via a computer network/Internet 203. By way of example, a computer system 204 or a mobile device/smartphone 205 may load the computer program 202 and carry out the invention by executing the program instructions of the computer program 202.

In a variation of this embodiment, the provisioning device 201 is a computer-readable storage medium, for example a SD card, that stores the computer program 202 and is connected directly to the computer system 204 or the mobile device/smartphone 205 in order for it to load the computer program 202 and carry out the invention by executing the program instructions of the computer program 202.

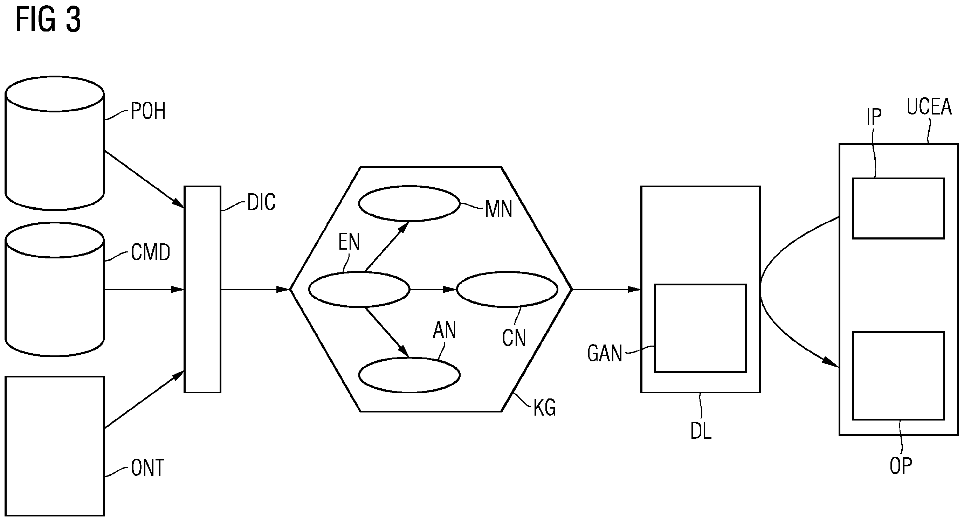

Preferably, the embodiments shown in Figs. 3 to 5 can be implemented with a structure as shown in Fig. 1 or Fig. 2.

In the following, the term "component" is used for the components that perform the embodiments, while the term "module" is used for modules of deployed systems, for example modules deployed in industrial automation systems. Despite the dedicated use of these terms, both terms are simply referring to the generic concept of a module/component, which can be implemented in hardware, software, or a combination of both.

Fig. 3 shows a customer-facing use-case evolution assistant UCEA based on a generative deep-learning component DL, which is an important technical feature of the embodiments described in the following. The embodiment shown in Fig. 3 is able to suggest possible steps to a customer for enhancing or evolving their deployed industrial products, for example the modules that they have deployed in an industrial automation system. These recommendations can be generated in a fully automated fashion. The generative deep-learning component DL is trained using a knowledge graph KG containing a semantically rich representation of the development of each customer's deployed system over time.

Preferably, the knowledge graph KG contains information about many deployed systems, i.e., many industrial automation systems that have been deployed in the field, for example information about the configuration, type and structure of the modules that form each of these deployed systems.

The main components of the current embodiment and their technical features will be described in the following. The core of the current embodiment lies in the modelling strategy in the knowledge graph KG and the learning algorithm built over it.

### Data integration and graph building

The current embodiment assumes that a supplier has access to a product order history POH, which is a database or other repository of semi-structured data containing a history of product orders placed by all customers. The products are, for example, the individual modules that are being deployed in the industrial automation systems, for example PLCs, robotic arms, etc. As a second, but optional data source, customer meta-data CMD includes any additional data on the application or industry context of each customer or their use-case. Processing the customer meta-data CMD will enhance the quality of the results of the current embodiment but is not strictly necessary.

Additionally, the current embodiment assumes that the supplier is able to use or create a conceptual representation of the properties of their own products, types of applications and customers as well as industry use-cases. At the minimum, the supplier should be able to create simple generalization (subsumption) hierarchies in which the above-mentioned content can be placed. Such hierarchies are common for many industry settings, e.g., ISO standards, and are represented as an ontology ONT in Fig. 3.

In an integration step, a data ingestion component DIC converts the content of the various data sources described above into an RDF(S) knowledge graph KG using the vocabulary from the relevant ontology ONT. For any customer, event, use case, customer site (deployed system), and/or module, instances are created as nodes in the knowledge graph KG with connecting edges where applicable. In the simplified example shown in Fig. 3, an event node EN represents a structure-changing event occurring in a deployed system of a customer. A customer node CN represents the customer, a module node MN represents a module of the deployed system, and an action node AN represents an action. The event node EN is at the center of a subgraph that belongs to the event node EN and includes the customer node CN, the module node MN, and the action node AN. For example, the module node MN might represent a PLC in an industrial automation system, and the action node AN might represent the action of installing that PLC in the deployed system. In that case, the event node EN and its subgraph represent an installation of a new PLC model in the deployed system. Some examples of other action types that can be represented by action nodes are a replacement/upgrade of modules, or a decommissioning of a module.

When creating the subgraphs, it is not necessary to duplicate nodes that already exist in the knowledge graph KG. Instead, it suffices to add an edge to the subgraph that connects the respective node to the subgraph.

In addition to or instead of the customer node CN, a node is added to the subgraph that identifies the deployed system in which the structure-changing event has occurred.

Preferably, the knowledge graph KG also models a structure of each deployed system with module nodes MN and corresponding edges.

The knowledge graph KG can be either fully materialized (e.g., created as an actual data artefact) or be created by means of virtualization (e.g., keeping the actual instance data in the original databases).

The generative deep-learning component DL is then trained with the knowledge graph KG to perform knowledge graph completion. To this end, the generative deep-learning component DL can contain a generative adversarial network (GAN), which is trained using GAN-based learning.

The use-case evolution assistant UCEA queries the deep-learning component DL for a recommendation. For the query, the use-case evolution assistant UCEA initializes a new subgraph by creating a new event node and an edge connecting the new event node to a node that identifies the deployed system that the recommendation is for. The new subgraph is provided as input IP to the deep-learning component DL.

The generative deep-learning component (DL) then generates a recommended action for a structural change of the respective deployed system, by completing the new subgraph with at least one action node identifying the recommended action and at least one module node identifying a first module that is added, replaced, or removed by the recommended action in the respective deployed system.

The use-case evolution assistant UCEA then uses a user interface to provide the first module and the recommended action as output OP to a user.

The following section goes in more detail about the modelling strategy, especially for enabling similarity metrics and changes to the customer's product base over time.

### Representation in the knowledge graph

The general approach for knowledge modelling in the knowledge graph KG is common for RDF(S) triple-stores with underlying ontology resources (the ontology ONT). The current embodiment creates instances of the main pertinent classes and connects them appropriately. The subsumption hierarchies in the underlying ontology ONT introduce generalization patterns into the knowledge graph KG by means of which powerful similarity metrics can be defined.

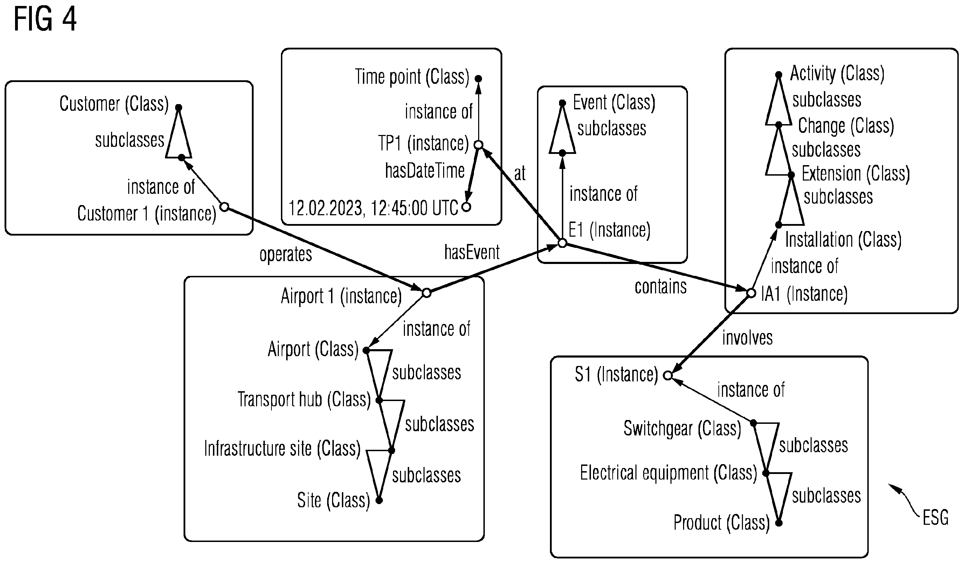

Figure 4 shows an example of an event subgraph ESG, which is an excerpt of the knowledge graph KG shown in Fig. 3. The aim of the event subgraph ESG is to model how Customer 1 has installed a new switchgear at one of their sites, namely Airport 1, on at 12:45 o'clock on February 12, 2023.

In the top left subgraph, *Customer 1* is represented by a node connected to the class *Customer* via an instance-of edge and potential further subclass-of links within the hierarchy underneath *Customer.* From *Customer 1,* there is an edge to *Airport* 1, an instance of the class *Airport.* This class is again embedded in a subclass hierarchy underneath the class *Site.* This makes the instance *Airport* 1 also an instance of *Transport hub, Infrastructure site* and *Site. Airport* 1 is connected to an event, more precisely an instance E1 of the class *Event.* E1 has edges to two further nodes, TP1 and IA1. The former, an instance of the class *Time point,* carries the exact date and time of the event, attached via a so-called data property named *hasDateTime.* The latter node, IA1, captures what happened at that date. More precisely, IA1 is an instance of the class *Installation* and embedded in a subclass hierarchy that makes it an *Extension, Change,* and *Activity* as well. The object of the installation activity is the node S1, connected to IA1, an instance of *Switchgear* and, by transitivity, *Electrical equipment* and *Product.*

Just as for classes, the edges *operates, hasEvent, at, hasDateTime, contains,* and *involves* are part of the underlying ontology (the ontology ONT shown in Fig. 3) and may themselves be embedded in rich subsumption hierarchies. Note that subsumption hierarchies support poly-hierarchies, i.e., classes may be connected to multiple super-classes at once. This greatly enhances the modelling flexibility and, crucially for the current embodiment, increases the number of potential anchor points by which the similarity of instance nodes can be established, as we will discuss below.

Note that the example shown in Figure 4 is greatly simplified. For real-life customers of actual suppliers, one would expect many more types of customers, sites, activities, and products as well as many more events per product, many products per site and many sites per customer. Moreover, in a real-life example one would see a lot more data-fields attached containing serial numbers or other IDs, labels, customer particulars, product specifics, etc.

The generative deep-learning component DL shown in Fig. 3 is trained to complete subgraphs like the one shown in Fig. 4. If a new subgraph is initialized with an event node and an edge connecting the new event node to a node identifying the customer/customer site/deployed system, then the generative deep-learning component DL can generate the remaining parts of the subgraph as shown in Fig. 4, without the subsumption hierarchies that are depicted with triangles in Fig. 4 for mere illustration, and without a specific time point instance, but with a module node identifying a module and with an action node identifying an action type, for example installation as shown in Fig. 4.

### Discrete event-oriented historization

As shown above, now referring again to Fig. 3, each change to a customer's situation is represented by an event node EN in the knowledge graph KG. The exact date and time of the event are attached as a data-field via a data-property. The relevant context of the event, i.e., what type of action has happened concerning which module of the deployed system, is attached as a subgraph to the event node EN, as was described above.

Although this modelling strategy is common for knowledge-graphs, it breaks down the continuous flow of changes at a customer site into a discrete set of subgraphs for which well-established similarity metrics exist.

### Measuring similarity in knowledge graphs

Generative adversarial networks (GANs) can be used for measuring similarity in knowledge graphs. GANs will be described in more detail below.

Ganggao Zhu and Carlos A. Iglesias: Computing Semantic Similarity of Concepts in Knowledge Graphs, IEEE Transactions on Knowledge and Data Engineering, VOL. 28, 2016, disclose algorithms for measuring similarity of subgraphs in RDF(S) knowledge graphs. The entire contents of that document are incorporated herein by reference.

In this well-established field of measuring similarity of subgraphs in RDF(S) knowledge-graphs, similarity measures for subgraphs are computed based on (1) topological differences, (2) distances in subsumption hierarchies of classes or properties, and/or (3) metrics on the contents of data-fields.

Using the example above, this means, for example:

### (1) Topological differences

*Customer 1* in the example above is less similar to some *Customer* 2 with two event nodes linked via *hasEvent.* Conversely, *Customer 1* is more similar to a *Customer 3* with exactly one event attached as well.

### (2) Distances in subsumption hierarchies

Switchgear S1 is more similar to, say, an electrical pump P1, which would be (possibly by transitivity) an instance of *Electrical equipment* than to a gas turbine which would still (by transitivity) be an instance of *Product* but not of *Electrical equipment.*

### (3) Metrics on data-fields

Another time-point TP2 representing 12.02.2023, 13:45:00 UTC, i.e., one hour later, is more similar to one that's one day later.

### Generative adversarial network algorithm

As shown in Fig. 3, the deep learning component DL contains a generative adversarial network GAN.

Ian J. Goodfellow, Jean Pouget-Abadie, Mehdi Mirza, Bing Xu, David Warde-Farley, Sherjil Ozair, Aaron Courville, Yoshua Bengio: Generative Adversarial Nets, Advances in Neural Information Processing Systems 27 (NIPS 2014), disclose generative adversarial networks (abbreviated as GAN). The entire contents of that document are incorporated herein by reference.

Qi Wang, Yuede Ji, Yongsheng Hao, Jie Cao: GRL: Knowledge graph completion with GAN-based reinforcement learning, Knowledge-Based Systems, Volume 209, 17 December 2020, 106421, disclose a method for knowledge graph completion with GAN-based reinforcement learning. The entire contents of that document are incorporated herein by reference.

Building on a similarity metric like the one described in the previous section, the current embodiment utilizes a GAN algorithm to (1) build a distance metric over the main instances in the knowledge graph KG and (2) compute completions to existing subgraphs based on that metric, by performing knowledge graph completion with GAN-based learning.

This application of generative adversarial networks enables the use case evolution assistant UCEA shown in Fig. 3 to provide its main service of suggesting further actions to a customer.

Consider Customer 1 from the example shown in Figure 4. For each site, the GAN system can be triggered to suggest a completion based on similar sites run by this and other customers. Based on customers with similar contexts, the GAN system will construct (rather than simply retrieve) a completion to maximize similarities to appropriate other sites in the knowledge graph. The relevant actions are then presented as suggestions to the customer for consideration.

Examples for such suggestions might be to add or remove modules to the site or change the operational parameters of existing modules. The value of the suggestions inherently depends on both the number of customer sites in the graph and the quality especially of the event model.

### Customer-facing evolution assistant

The GAN algorithm described above enables the current embodiment with a technique to suggest evolutionary improvements fully automatically to the installed product base of a customer. This enables a number of novel customer services, in particular a strategic evolution dashboard and a strategic evolution assistant.

### Strategic evolution dashboard

Customers are already used to dashboards providing a `tactical' view of their sites by means of summaries of the performance of their equipment over time or even using real-time data. A further embodiment enables fully automated site dashboards with a 'strategic' perspective. These would show the customer whether the equipment on the site should be modified beyond simple operational parameters to keep up with the state-of-the-art in the industry. This includes suggestions to adding or removing products altogether or replacing outdated equipment by more modern alternatives - even if the alternatives involve altogether different products or approaches.

As discussed before, this kind of strategic advice is computed fully automatically. Hence, the customer can access such a strategic dashboard at any time of their choosing.

There are even potential synergies between the tactical and strategic view, e.g., by using signs for non-optimal operation of some equipment as a prompt for strategic changes to the equipment beyond simple adjustments to the operational parameters.

### Strategic evolution assistant

While the strategic evolution dashboard above is actively invoked by the user, the current embodiment could also be deployed as a pro-active assistant. Such an assistant would contact the customer as soon as an opportunity for improvement arose. The advantage from the customer's perspective is that needless time spent on the strategic dashboard with no promising suggestions can be avoided.

From the supplier's perspective running a pro-active assistant differs very little from a dashboard. In both cases the GAN algorithm needs to run over the entire knowledge graph as soon as the customer history changes in a meaningful way. In case of the proactive assistant, the only additional step is to reach out to the customer as soon as an 'interesting' result with sufficient confidence level is obtained.

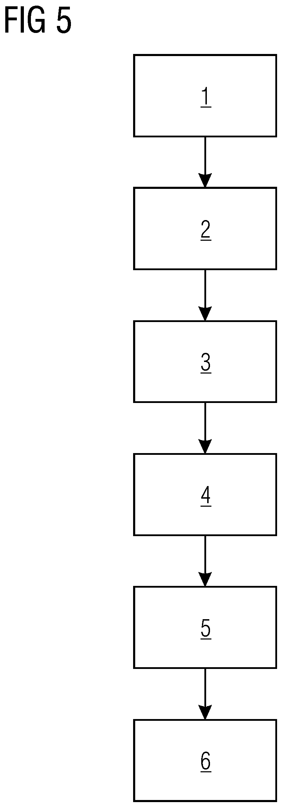

Fig. 5 shows a flowchart of a possible exemplary embodiment of a method for recommending changes to a deployed industrial automation system.

In a first operation 1, a database provides semi-structured data about a first deployed system and other deployed systems, wherein each deployed system is an industrial automation system at a different location, and wherein each deployed system consists of modules.

In a second operation 2, a data ingestion component uses an ontology to integrate the semi-structured data into a single knowledge graph, by representing
- each deployed system with a node, wherein a first node represents the first deployed system,
- a structure of each deployed system with module nodes and edges, wherein each module node represents a module of the deployed system, and
- a structural development of each deployed system over time, by creating an event node for each structure-changing event in the deployed system and attaching a subgraph to the event node representing a context of the structure-changing event, wherein the subgraph contains edges from the event node to
   - the node representing the deployed system,
   - at least one of the module nodes, and
   - at least one action node representing a type of action of the structure-changing event.

In a third operation 3, a generative deep-learning component is trained with the knowledge graph to perform knowledge graph completion.

In a fourth operation 4, a new subgraph is initialized by creating a new event node and an edge connecting the new event node to the first node.

In a fifth operation 5, the generative deep-learning component receives as input the new subgraph and generates a recommended action for a structural change of the first deployed system, by completing the new subgraph with at least one action node identifying the recommended action and at least one module node identifying a first module that is added, replaced, or removed by the recommended action in the first deployed system.

In a sixth operation 6, a user interface outputs at least the first module and the recommended action.

At least some of the operations can be executed in parallel or alternatingly, for example the first operation 1 and the second operation 2.

For example, the method can be executed by one or more processors. Examples of processors include a microcontroller or a microprocessor, an Application Specific Integrated Circuit (ASIC), or a neuromorphic microchip, in particular a neuromorphic processor unit. The processor can be part of any kind of computer, including mobile computing devices such as tablet computers, smartphones or laptops, or part of a server in a control room or cloud.

The above-described method may be implemented via a computer program product including one or more computer-readable storage media having stored thereon instructions executable by one or more processors of a computing system. Execution of the instructions causes the computing system to perform operations corresponding with the acts of the method described above.

The instructions for implementing processes or methods described herein may be provided on non-transitory computer-readable storage media or memories, such as a cache, buffer, RAM, FLASH, removable media, hard drive, or other computer readable storage media. Computer readable storage media include various types of volatile and non-volatile storage media. The functions, acts, or tasks illustrated in the figures or described herein may be executed in response to one or more sets of instructions stored in or on computer readable storage media. The functions, acts or tasks may be independent of the particular type of instruction set, storage media, processor or processing strategy and may be performed by software, hardware, integrated circuits, firmware, micro code, and the like, operating alone or in combination. Likewise, processing strategies may include multiprocessing, multitasking, parallel processing, and the like.

The invention has been described in detail with reference to embodiments thereof and examples. Variations and modifications may, however, be effected within the spirit and scope of the invention covered by the claims. The phrase "at least one of A, B and C" as an alternative expression may provide that one or more of A, B and C may be used.

## Claims

1. A computer implemented method for recommending changes to a deployed industrial automation system, wherein the following operations are performed by components, and wherein the components are hardware components and/or software components executed by one or more processors:
- providing (1), by a database (POH), semi-structured data about a first deployed system and other deployed systems, wherein each deployed system is an industrial automation system at a different location, and wherein each deployed system consists of modules,
- integrating (2), by a data ingestion component (DIC) using an ontology (ONT), the semi-structured data into a single knowledge graph (KG), by representing
- each deployed system with a node, wherein a first node represents the first deployed system,
- a structure of each deployed system with module nodes (MN) and edges, wherein each module node (MN) represents a module of the deployed system, and
- a structural development of each deployed system over time, by creating an event node (EN) for each structure-changing event in the deployed system and attaching a subgraph to the event node (EN) representing a context of the structure-changing event, wherein the subgraph contains edges from the event node (EN) to
- the node representing the deployed system,
- at least one of the module nodes (MN), and
- at least one action node (AN) representing a type of action of the structure-changing event,
- training (3) a generative deep-learning component (DL) with the knowledge graph (KG) to perform knowledge graph completion,
- initializing (4) a new subgraph by creating a new event node and an edge connecting the new event node to the first node,
- generating (5), by the generative deep-learning component (DL) receiving as input the new subgraph, a recommended action for a structural change of the first deployed system, by completing the new subgraph with at least one action node (AN) identifying the recommended action and at least one module node (MN) identifying a first module that is added, replaced, or removed by the recommended action in the first deployed system, and
- outputting (6), by a user interface (105), at least the first module and the recommended action.

2. The method of claim 1,
- wherein the generative deep-learning component (DL) contains a generative adversarial network (GAN), and
- wherein the training operation (3) is performed with GAN-based learning.

3. The method according to any of the preceding claims,
wherein the ontology (ONT) provides a conceptual representation of properties of the modules of the deployed systems.

4. The method according to any of the preceding claims,
- wherein the ontology (ONT) contains subsumption hierarchies that support poly-hierarchies, wherein each module is embedded in one of the subsumption hierarchies.

5. The method according to any of the preceding claims,
- wherein each action node (AN) represents an installation action adding a module, a replacement action replacing a module, or a decommissioning action removing a module.

6. A system for recommending changes to a deployed industrial automation system, comprising:
- a database (POH), configured for providing (1) semi-structured data about a first deployed system and other deployed systems, wherein each deployed system is an industrial automation system at a different location, and wherein each deployed system consists of modules,
- a data ingestion component (DIC), configured for using an ontology (ONT) to integrate (2) the semi-structured data into a single knowledge graph (KG), by representing
- each deployed system with a node, wherein a first node represents the first deployed system,
- a structure of each deployed system with module nodes (MN) and edges, wherein each module node (MN) represents a module of the deployed system, and
- a structural development of each deployed system over time, by creating an event node (EN) for each structure-changing event in the deployed system and attaching a subgraph to the event node (EN) representing a context of the structure-changing event, wherein the subgraph contains edges from the event node (EN) to
- the node representing the deployed system,
- at least one of the module nodes (MN), and
- at least one action node (AN) representing a type of action of the structure-changing event,
- a generative deep-learning component (DL), having been trained (3) with the knowledge graph (KG) to perform knowledge graph completion, and configured for
- receiving as input a new subgraph with a new event node and an edge connecting the new event node to the first node, and
- generating (5) a recommended action for a structural change of the first deployed system, by completing the new subgraph with at least one action node (AN) identifying the recommended action and at least one module node (MN) identifying a first module that is added, replaced, or removed by the recommended action in the first deployed system, and
- a user interface (105), configured for outputting (6) at least the first module and the recommended action.

7. A computer program product comprising instructions which, when the program is executed by a computer, cause the computer to carry out a method according to one of the method claims.

8. A provisioning device for the computer program product according to the preceding claim, wherein the provisioning device stores and/or provides the computer program product.
